# FASCICULE DE BREVET EUROPEEN

(11) **EP 2 889 708 B1**
(45) Date de publication et mention de la délivrance du brevet: **10.07.2019**
(21) Numéro de dépôt: 14200222.9
(22) Date de dépôt: 23.12.2014
(51) Int. Cl.: G05B 19/042, F04D 15/00, F04B 49/06

(54) **Commande électronique pour une pompe de circulation, pompe de circulation et procédé correspondant**
Elektronische Steuerung für eine Umwälzpumpe, Umwälzpumpe und entsprechendes Verfahren
Electronic control for a circulation pump, circulation pump and corresponding method

(30) Priorité: 24.12.2013 FR 1363563
(43) Date de publication de la demande: 01.07.2015
(73) Titulaire: Wilo Salmson France, 78400 Chatou (FR)
(72) Inventeur: Dejean, Philippe, 53960 BONCHAMP LES LAVAL (FR); Bouilly, Hervé, 53940 LE GENEST ST ISLE (FR); Guillet, Donald, 53960 BONCHAMP LES LAVAL (FR); Hinard, Julien, 53000 LAVAL (FR)
(74) Mandataire: Hirsch & Associés

(56) Documents cités:
- EP-A1- 2 573 403
- EP-A1- 2 610 500
- FR-A1- 2 815 147
- GILSON: "333 and 334 Pumps User's Guide", , 1 février 2000 (2000-02-01), XP055144342, Extrait de l'Internet: URL:http://www.gilson.com/resources/333334 _prepscale_hplc_pumps_users_guide.pdf [extrait le 2014-10-03]

## Description

L'invention se rapporte à une commande électronique pour une pompe de circulation. L'invention se rapporte en outre à une pompe de circulation et à un procédé de contrôle d'un moteur de pompe de circulation.

Dans le domaine des installations hydrauliques, il est connu de recourir à une pompe de circulation, également appelé circulateur, pour permettre la circulation d'un fluide dans l'installation hydraulique. De telles pompes sont ainsi présentes dans les installations d'eau chaude sanitaire ou dans les installations de chauffage domestique, qu'il s'agisse de chauffage au fioul, au gaz ou par énergie solaire. De telles installations sont réalisées au domicile de l'utilisateur, directement dans la partie privative du domicile ou dans les parties communes d'une copropriété du domicile de l'utilisateur.

EP2573403A1 divulgue une pompe électrique munie d'un dispositif de contrôle, ledit dispositif comportant des moyens de stockage et un microprocesseur et étant configuré pour recevoir des informations de données.

GILSON : « 333 and 334 Pumps User's Guide » (2000-02-01, XP055144342) divulgue des instructions pour utiliser de façon sûre des pompes de la marque Gilson.

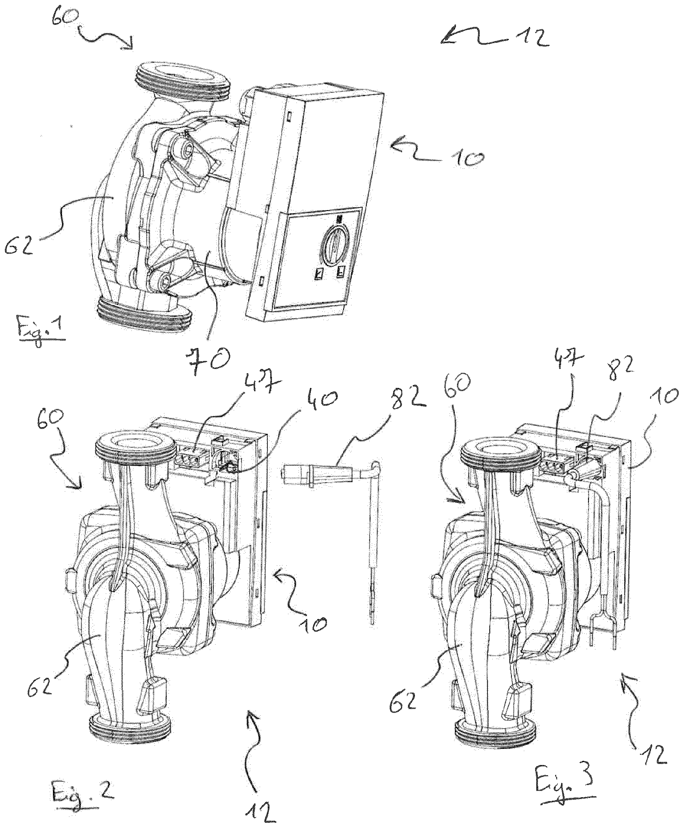

Dans l'état de la technique, pour permettre le contrôle des pompes de circulation, il est connu d'intégrer aux pompes de circulation une commande électronique contrôlant un moteur d'entraînement de la pompe. La figure 1 montre une vue en perspective d'une pompe 60 comprenant une commande électronique 10 pour contrôler le moteur d'entraînement 70 de la pompe 60. Le moteur d'entraînement 70 assure l'entraînement d'un rotor muni d'une roue à aubes, non illustrée, pour impulser la circulation d'un fluide dans le corps hydraulique 62 de la pompe 60. La figure 2 montre une vue arrière d'une telle pompe 60. Tel qu'illustrée, la commande électronique 10 comporte un certain nombre de connecteurs. La commande électronique 10 comprend un premier connecteur 47 pour l'alimentation électrique de l'ensemble de la pompe.

La commande électronique 10 comprend en outre des connecteurs de communication électronique avec des organes externes à la pompe. Ces connecteurs de communication électronique avec des organes externes à la pompe comprennent d'une part le connecteur 40 de communication de pilotage de la pompe. Ce connecteur 40 est prévu pour recevoir un câble de connexion 82, tel qu'illustré en figure 3. Ce câble de connexion permet par exemple de relier la commande électronique 10 avec une chaudière de l'installation hydraulique domestique qui peut transmettre des données de contrôles par exemple en fonction d'un thermostat de l'installation hydraulique domestique. D'autre part ces connecteurs de communication électrique avec des organes externes à la pompe 60 comprennent aussi un connecteur de paramétrage.

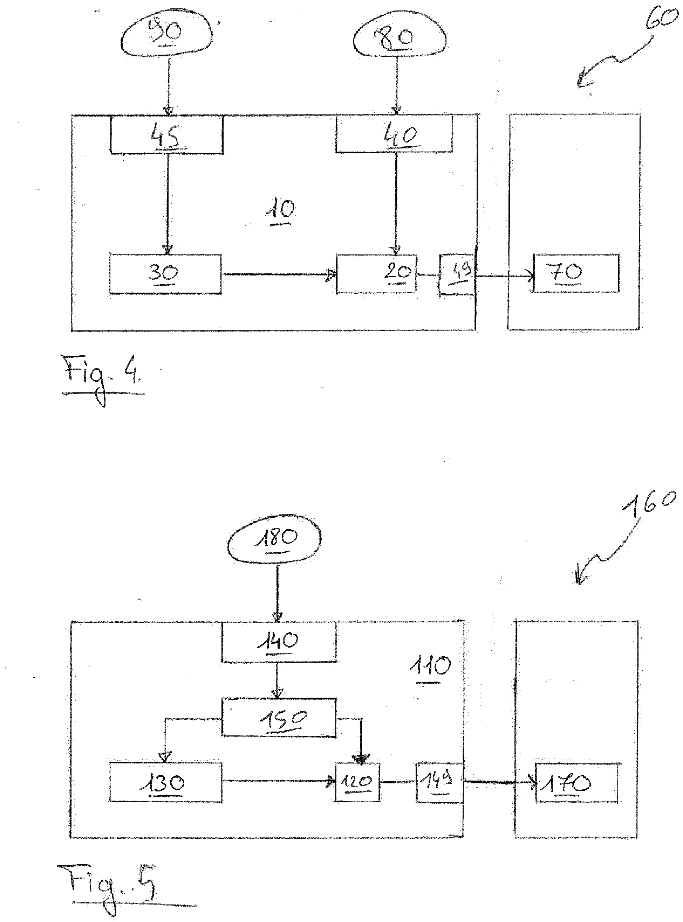

En référence à la figure 4 qui montre, en vue schématique, la pompe 60, ce connecteur de paramétrage 45 permet la communication de données de paramétrage 90
à la commande électronique 10. La commande électronique 10 comprend un module 30 qui reçoit ses données 90 pour permettre le paramétrage d'un module de contrôle 20 de la commande 10. En fonction du paramétrage communiqué à la commande par le connecteur 45, les données de contrôle 80, reçues par le connecteur 40, sont converties par le module de contrôle 20 en consigne hydraulique, à partir de laquelle le module de contrôle 20 pilote le moteur 70, la puissance étant transmise via un connecteur de puissance 49 au moteur. Ces données de paramétrage 90 peuvent être fournies par un opérateur tel que le fabricant d'installation hydraulique en fonction des caractéristiques de la pompe et de l'installation hydraulique envisagées. Ces données sont typiquement communiquées lors de l'assemblage en usine de la pompe 60.

A la différence du connecteur de pilotage 40 de la pompe 60, le connecteur de paramétrage 45 n'est pas visible sur les figures 2 et 3 car ce connecteur est rendu inaccessible à l'usager pour des questions esthétiques. Cette inaccessibilité pose un problème lorsqu'un nouveau paramétrage de la pompe 60 est nécessaire ou lorsque le paramétrage de la pompe n'a pas lieu en usine mais sur le site de l'usager.

Il existe donc un besoin pour une commande électronique d'une pompe de circulation dont l'accès au paramétrage est simplifié.

A cette fin, la présente invention propose une commande électronique pour une pompe de circulation comprenant un moteur d'entrainement, la commande comprenant :
- un module de contrôle du moteur d'entraînement de la pompe de circulation ;
- un module de paramétrage du module de contrôle ;
- un connecteur de communication électrique ;
- un module de communication relié, d'une part, au connecteur et, d'autre part, aux modules de paramétrage et de contrôle, le module de communication étant adapté à distribuer des données de paramétrage et des données de contrôle, reçues par le connecteur, respectivement au module de paramétrage et au module de contrôle.

Selon une variante, la commande électronique est dépourvue de connecteur de communication électronique autre que le connecteur auquel est relié le module de communication.

Selon une variante, le module de contrôle est paramétré par le module de paramétrage pour convertir les données de contrôle distribuées par le module de communication en une consigne hydraulique de pilotage du moteur d'entrainement de la pompe.

Selon une variante, le module de contrôle est adapté à recevoir des données de contrôle, et, de préférence, à émettre des données de retour sous forme de débit, puissance et pression.

Selon une variante, le module de contrôle est adapté à recevoir les données de contrôle sous la forme de modulation de largeur d'impulsion.

Selon une variante, le module de paramétrage est adapté à recevoir les données de paramétrage sous la forme d'un signal émetteur-récepteur asynchrone universel.

Selon une variante, le module de communication est adapté à identifier par défaut les données reçues comme des données de contrôle, et à identifier après la réception d'un signal de commutation les données reçues comme des données de paramétrage, au moins pendant un laps de temps déterminé.

Selon une variante, le signal de commutation est un signal de fréquence supérieure à 5000 Hz, de préférence supérieure ou égale à 20000Hz, et de durée supérieure ou égale à 100 ms.

Selon une variante, le module de communication est adaptée à identifier les données comme des données de paramétrage suite au signal de commutation et jusqu'à l'absence de réception de tout signal pendant un laps de temps prédéterminé, de préférence supérieur ou égale à 1 minute.

L'invention propose aussi une pompe de circulation d'une installation hydraulique domestique, ladite pompe comprenant un moteur d'entraînement et la commande électronique précédente adaptée à contrôler le moteur d'entraînement.

L'invention propose encore un procédé de contrôle d'un moteur d'entraînement de pompe de circulation à l'aide de la commande électronique précédente, le procédé comprenant :
- la fourniture au module de communication de la commande électronique des données de paramétrage ou de contrôle par l'intermédiaire du connecteur de la commande électronique ;
- l'identification par le module de communication de la nature des données fournies entre des données de paramétrage ou des données de contrôle ;
- le paramétrage du module de contrôle à l'aide du module de paramétrage lorsque les données fournies au module de communication sont identifiées comme étant des données de paramétrage ; ou
- le contrôle du moteur d'entraînement à l'aide du module de contrôle lorsque les données fournies au module de communication sont identifiées comme étant des données de contrôle.

D'autres caractéristiques et avantages de l'invention apparaîtront à la lecture de la description qui suit d'un mode de réalisation préféré de l'invention, donnée à titre d'exemple et en référence aux dessins annexés.
La figure 1 montre une vue en perspective d'une pompe connue comprenant un commande électronique.
La figure 2 montre une vue arrière de la pompe de la figure 1, avec un câble de connexion déconnecté.
La figure 3 montre la pompe des figures 1 et 2 avec le câble de connexion connecté.
La figure 4 montre, en vue schématique, la pompe des figures 1 à 3.
La figure 5 représente, de façon schématique, une pompe comprenant une commande électronique proposée.

Il est proposé une commande électronique pour une pompe de circulation. En particulier, la commande électronique proposée est prévue pour une pompe de circulation, également désignée par l'expression "circulateur hydraulique", d'une installation hydraulique domestique d'eau chaude sanitaire ou de chauffage, c'est-à-dire notamment les installations hydrauliques installées au domicile de l'usager. Une telle installation hydraulique peut ainsi correspondre à une installation d'eau chaude sanitaire ou de chauffage domestique de tout bâtiment, tel qu'un immeuble d'habitation ou de bureaux et notamment tel qu'une usine. Cette installation hydraulique ne correspond toutefois pas à une installation hydraulique industrielle. Ainsi, la puissance hydraulique utile nominale du circulateur de l'installation à dépanner peut être comprise entre 1 et 2500 W.

La pompe de circulation à commander correspond à la pompe de circulation 60 illustrée en figure 1 à 3, à la différence que la commande électronique 10 est remplacée par la commande électronique proposée. La commande électronique proposée est ainsi adaptée à contrôler un moteur d'entraînement de la pompe de circulation. Par ailleurs de même que précédemment le moteur d'entraînement assure l'entraînement d'un rotor muni d'une roue à aubes pour impulser la circulation d'un fluide dans le corps hydraulique de la pompe. La figure 5 montre une vue schématique de la commande électronique proposée 110 pour contrôler la pompe 160 muni du moteur d'entraînement 170. La pompe comprenant le moteur d'entraînement 170 et la commande électronique proposée 110 pour contrôler le moteur 170 est également proposée.

En référence à la figure 5, la commande électronique 110 comporte un module de contrôle 120 du moteur 170 de la pompe 160. Le module de contrôle 120 convertit des données de contrôle, telles que celles envoyées par une chaudière de l'installation hydraulique, en une consigne hydraulique utilisée pour piloter le moteur 170 de la pompe 160. En d'autres termes, en fonction des données de contrôle le module de contrôle pilote le moteur 170 par une consigne hydraulique, telle qu'une consigne de courbe hydraulique, un débit ou une pression. Le module de contrôle 120 peut notamment être adapté pour communiquer de manière bidirectionnelle. Ainsi en plus de recevoir des données de contrôle, le module de contrôle peut envoyer à la chaudière de l'installation hydraulique des données telles que le débit circulant dans la pompe, la puissance consommée par la pompe, ou tout autre donnée utile pour la chaudière et pouvant être déterminée par la pompe. La conversion des données de contrôle en consigne hydraulique a lieu en fonction du paramétrage de ce module 120.

Le fonctionnement de la pompe 160 est en effet notamment conditionné par les paramètres de programmation de la pompe 160. Ces paramètres de programmation de la pompe 160 sont notamment choisis en fonction des caractéristiques physiques de la pompe 160 et des caractéristiques de l'installation hydraulique sur laquelle la pompe 160 est installée. Pour permettre la modification du paramétrage en fonction de ces différents facteurs, la commande proposée 110 comprend un module de paramétrage 130. En fonction des données de paramétrage reçues par le module de paramétrage 130, ce module 130 paramètre le module de contrôle 120, ou modifie le paramétrage du module de contrôle 120.

Toutefois à la différence de la commande connue 10, la commande proposée 110 comprend un connecteur 140 de communication électronique qui reçoit à la fois les données de paramétrage et à la fois les données de contrôle. Pour permettre la distribution de ces données 180, la commande 110 comprend un module de communication 150 relié à ce connecteur 140. Pour des questions d'architecture et de compacité, les modules 120, 130, et 150 peuvent être intégrés sur une même carte électronique, la notion de modules étant notamment fonctionnelle et non nécessairement physique.

Ce module de communication 150 est adapté à distribuer les données de paramétrages et des données de contrôle, respectivement au module de paramétrage 130 et au module de contrôle 120. En d'autres termes, après la fourniture au module de communication 150 de données par l'intermédiaire du connecteur 140, le module de communication 150 identifie la nature des données fournies. Est également proposé un tel procédé de contrôle du moteur 170 à l'aide de la commande 110 proposée et comprenant la fourniture des données au module de communication 150 et l'identification de la nature de ces données par le module de communication 150. Lorsque les données 180 fournies au module de communication 150 sont identifiées comme étant des données de paramétrage, le module de communication 150 transmet ces données au module de paramétrage 130 qui paramètre le module de contrôle 120 ou modifie les paramètres du module de contrôle 120. Lorsque les données 180 fournies au module de communication 150 sont identifiées comme étant des données de contrôle, le module de communication 150 transmet ces données au module de contrôle 120, qui convertit ces données en une consigne hydraulique en fonction de son paramétrage.

L'identification de la nature des données 180 effectuée par le module de communication 150 permet à la commande électronique proposée de ne comprendre qu'un seul connecteur de communication électronique avec des organes externes à la pompe. Cet unique connecteur est le connecteur 140 et correspond à la réunion des connecteurs 45 et 40 précédemment illustrées en figure 4. Le connecteur 140 concentre à la fois la fonction du connecteur de paramétrage et la fonction du connecteur de contrôle 40.

En définitive, cette réunion des connecteurs de communication externe en le seul connecteur de communication externe 140 permet de rendre plus accessible à l'usager le connecteur permettant le paramétrage de la pompe 160. Le paramétrage peut alors notamment être envisagé sur site, tel que lors d'un dépannage et notamment lors du remplacement d'une pompe endommagé par une pompe générique à paramétrer en fonction des caractéristiques de l'installation hydraulique à dépanner. L'utilisation d'un seul connecteur de communication externe tel que proposé permet par ailleurs de faciliter la conception de la commande électronique, et notamment de son boîtier, également désigné carter. Même si le connecteur 140 est le seul connecteur de communication externe, la commande électronique proposée peut aussi comprendre des connecteurs autres que des connecteurs de communication. La commande 110 peut ainsi comprendre un connecteur 149 de transmission de puissance au moteur 170 de la pompe, la puissance transmise étant contrôlée par le module de contrôle en fonction des données de contrôle reçues, par l'intermédiaire de la consigne hydraulique. La commande électronique 110 peut aussi comprendre un connecteur d'alimentation électrique, similaire au connecteur connu 47 illustré en figures 2 et 3. Selon le mode de réalisation illustré, le connecteur 149 et le connecteur d'alimentation électrique n'étant pas des connecteurs de communication, la commande électronique 110 est bien dépourvue de connecteur de communication électronique autre que le connecteur 140. En d'autres termes, la commande 110 peut être dépourvue de connecteur de communication électronique autre que le connecteur 140 auquel est relié le module de communication.

Le module de contrôle 120 de la commande électronique proposée 110 peut notamment être adaptée à recevoir des données de contrôle sous la forme de modulation de largeur d'impulsion (également désignée par l'expression anglaise Pulse Width Modulation, abrégée en PWM). Le module de paramétrage 130 peut lui être adapté à recevoir les données de paramétrage sous la forme d'un signal émetteur-récepteur asynchrone universel (signal ou protocole également désigné par l'expression anglaise Universal Asynchronous Receiver Transmitter, abrégé en UART). Indépendamment du type de connecteur de communication externe 140, et de la forme des données de contrôles, le connecteur 140 est en tous les cas prévu pour recevoir les deux types de données, de contrôle et de paramétrage. A cette fin, le connecteur 140 peut notamment être du type PWM, notamment bidirectionnel, les signaux UART pouvant transiter par ce type de connecteur.

Pour distinguer la nature des signaux reçus par le module de communication 150 via le connecteur 140, différentes méthodes d'identification peuvent être envisagées. En particulier il est préféré que par défaut les données reçues par le module de communication soient identifiées comme des données de contrôle. Ainsi à la mise sous tension de la pompe, le module de communication 150 identifie les données 180 comme des données de contrôle à communiquer au module de contrôle 120. Cette identification peut cesser à la réception d'un signal de commutation dans les données 180. Le signal de commutation correspond par exemple à un signal de fréquence supérieure à 5000 Hz, qui correspond à la limite haute des signaux de type PWM. De préférence le signal de commutation peut présenter une fréquence supérieure ou égale à 20000Hz pour bien se différencier des fréquences de signaux de contrôle qui peuvent être de signaux PWM. La hauteur de fréquence seule peut suffire à identifier le signal de commutation. Néanmoins pour des questions de stabilité il peut être préférable, d'associer la hauteur de fréquence à une certaine durée de signal de commutation, telle supérieure ou égale à 100 ms. A la suite du signal de commutation, les données 180 sont identifiées par le module de communication 150 comme des données de paramétrage à transmettre au module de paramétrage 130. Une telle identification peut demeurer au moins pour une durée déterminée et de préférence pour une durée déterminée après l'absence de tout signal. Ainsi, selon cette dernière variante, suite à une absence de données 180 reçues par le module de communication 150 pendant une certaine période déterminée, le module de communication 150 identifie de nouvelles données 180 comme des données de contrôle. Cette période d'absence de données 180 reçues, période de commutation, peut être choisie supérieure ou égale à 1 minute. Avec ou sans période de commutation prévue, la pompe 160 peut être débranchée puis rebranchée pour que la commande électronique 110 identifie interprète de nouveau par défaut les données fournies comme étant des données de contrôle.

Bien entendu, la présente invention n'est pas limitée aux exemples et au mode de réalisation décrits et représentés, mais elle est susceptible de nombreuses variantes. Notamment, à la mise sous tension de la pompe, le module de communication 150 peut identifier les données 180 comme des données de paramétrage à communiquer au module de paramétrage 120 et ce pendant une certaine durée prédéterminée, tel que de l'ordre de la minute. Cette période initiale d'identification temporaire et par défaut des données 180 comme des données de paramétrage, permet de simplifier le module de communication 150 qui peut ne pas discriminer les éventuelles différences de fréquences entre données de contrôle et de paramétrage.

## Revendications

1. Commande électronique (110) pour une pompe de circulation (160) comprenant un moteur d'entrainement (170), la commande comprenant :
- un module de contrôle (120) du moteur d'entraînement (170) de la pompe de circulation ;
- un module de paramétrage (130) du module de contrôle ;
- un connecteur (140) de communication électrique ;
- un module de communication (150) relié, d'une part, au connecteur et, d'autre part, aux modules de paramétrage et de contrôle, le module de communication étant adapté à
- distribuer des données de paramétrage et des données de contrôle, reçues par le connecteur, respectivement au module de paramétrage et au module de contrôle, et
- identifier par défaut les données reçues comme des données de contrôle, et identifier après la réception d'un signal de commutation les données reçues comme des données de paramétrage, au moins pendant un laps de temps déterminé.

2. Commande électronique (110) selon la revendication 1, dans laquelle le module de contrôle est paramétré par le module de paramétrage pour convertir les données de contrôle distribuées par le module de communication en une consigne hydraulique de pilotage du moteur d'entrainement de la pompe.

3. Commande électronique (110) selon la revendication 2, dans laquelle le module de contrôle est adapté à recevoir des données de contrôle, et, de préférence, à émettre des données de retour sous forme de débit, puissance et pression.

4. Commande électronique (110) selon l'une des revendications 1 à 3, dans laquelle le module de contrôle est adapté à recevoir les données de contrôle sous la forme de modulation de largeur d'impulsion.

5. Commande électronique (110) selon l'une des revendications 1 à 4, dans laquelle le module de paramétrage est adapté à recevoir les données de paramétrage sous la forme d'un signal émetteur-récepteur asynchrone universel.

6. Commande électronique (110) selon l'une des revendications 1 à 5, dans laquelle le signal de commutation est un signal de fréquence supérieure à 5000 Hz, de préférence supérieure ou égale à 20000Hz, et de durée supérieure ou égale à 100 ms.

7. Commande électronique (110) selon l'une des revendications 1 à 6, dans laquelle le module de communication est adaptée à identifier les données comme des données de paramétrage suite au signal de commutation et jusqu'à l'absence de réception de tout signal pendant un laps de temps prédéterminé, de préférence supérieur ou égale à 1 minute.

8. Pompe de circulation (160) d'une installation hydraulique domestique, ladite pompe comprenant un moteur d'entraînement (170) et une commande électronique selon l'une des revendications 1 à 7 adaptée à contrôler le moteur d'entraînement (170).

9. Procédé de contrôle d'un moteur d'entraînement (170) de pompe de circulation (160) à l'aide d'une commande électronique (110) selon l'une des revendications 1 à7, le procédé comprenant :
- la fourniture au module de communication (150) de la commande électronique des données de paramétrage ou de contrôle par l'intermédiaire du connecteur (140) de la commande électronique ;
- l'identification par défaut par le module de communication (150) des données fournies comme des données de contrôle ;
- l'identification après la réception d'un signal de commutation par le module de communication (150) des données fournies comme des données de paramétrage, au moins pendant un laps de temps déterminé,
- le paramétrage du module de contrôle (120) à l'aide du module de paramétrage (130) lorsque les données fournies au module de communication sont identifiées comme étant des données de paramétrage ; ou
- le contrôle du moteur d'entraînement (170) à l'aide du module de contrôle lorsque les données fournies au module de communication sont identifiées comme étant des données de contrôle.

## Patentansprüche

1. Elektronische Steuerung (110) für eine Umwälzpumpe (160), umfassend einen Antriebsmotor (170), wobei die Steuerung aufweist:
- ein Steuermodul (120) des Antriebsmotors (170) der Umwälzpumpe,
- ein Parametrierungsmodul (130) des Steuermoduls,
- einen elektrischen Kommunikationsstecker (140),
- ein Kommunikationsmodul (150), das einerseits an den Stecker und andererseits an das Parametrierungs- und an das Steuermodul angeschlossen ist, wobei das Kommunikationsmodul geeignet ist, um
∘ Parametrierdaten und Steuerdaten, die von dem Stecker empfangen werden, jeweils an das Parametrierungsmodul und an das Steuermodul zu verteilen und
∘ standardmäßig die empfangenen Daten als Steuerdaten zu identifizieren und nach dem Empfangen eines Schaltsignals die empfangenen Daten mindestens während eines bestimmten Zeitraumes als Parametrierdaten zu identifizieren.

2. Elektronische Steuerung (110) nach Anspruch 1, wobei das Steuermodul durch das Parametrierungsmodul konfiguriert ist, um die Steuerdaten, die von dem Kommunikationsmodul verteilt werden, in einen hydraulischen Sollwert zum Steuern des Antriebsmotors der Pumpe umzuwandeln.

3. Elektronische Steuerung (110) nach Anspruch 2, wobei das Steuermodul geeignet ist, Steuerdaten zu empfangen und vorzugsweise Rückgabedaten in Form von Durchsatz, Leistung und Druck zu senden.

4. Elektronische Steuerung (110) nach einem der Ansprüche 1 bis 3, wobei das Steuermodul geeignet ist, die Steuerdaten in Form von Pulsweitenmodulation zu empfangen.

5. Elektronische Steuerung (110) nach einem der Ansprüche 1 bis 4, wobei das Parametrierungsmodul geeignet ist, die Parametrierdaten in Form von einem universellen asynchronen Sender-/Empfänger-Signal zu empfangen.

6. Elektronische Steuerung (110) nach einem der Ansprüche 1 bis 5, wobei das Schaltsignal ein Signal mit einer Frequenz ist, die höher als 5.000 Hz, vorzugsweise höher als oder gleich 20.000 Hz ist, und mit einer Dauer, die größer oder gleich 100 ms ist.

7. Elektronische Steuerung (110) nach einem der Ansprüche 1 bis 6, wobei das Kommunikationsmodul geeignet ist, die Daten als Parametrierdaten infolge des Schaltsignals und bis zur Abwesenheit des Empfangens von jeglichem Signal in einem vorgegebenen Zeitraum, vorzugsweise von gleich oder länger als 1 Minute, zu identifizieren.

8. Umwälzpumpe (160) einer häuslichen Hydraulikanlage, wobei die Pumpe einen Antriebsmotor (170) und eine elektronische Steuerung nach einem der Ansprüche 1 bis 7 aufweist, die geeignet ist, den Antriebsmotor (170) zu steuern.

9. Verfahren zum Steuern eines Antriebsmotors (170) einer Umwälzpumpe (160) mit Hilfe von einer elektronischen Steuerung (110) nach einem der Ansprüche 1 bis 7, wobei das Verfahren aufweist:
- das Bereitstellen durch den Stecker (140) der elektronischen Steuerung der Parametrierdaten und der Steuerdaten dem Kommunikationsmodul (150) der elektronischen Steuerung,
- das standardmäßige Identifizieren durch das Kommunikationsmodul (150) der bereitgestellten Daten als Steuerdaten,
- das Identifizieren der bereitgestellten Daten als Parametrierdaten nach dem Empfangen eines Schaltsignals durch das Kommunikationsmodul (150) mindestens während eines bestimmten Zeitraumes,
- das Parametrieren des Steuermoduls (120) mit Hilfe von dem Parametrierungsmodul (130), wenn die Daten, die dem Kommunikationsmodul bereitgestellt werden, als Parametrierdaten identifiziert werden, oder
- das Steuern des Antriebsmotors (170) mit Hilfe von dem Steuermodul, wenn die Daten, die dem Kommunikationsmodul bereitgestellt werden, als Steuerdaten identifiziert werden.

## Claims

1. An electronic control (110) for a circulation pump (160) comprising a drive motor (170), the control comprising:
- a control module (120) for the drive motor (170) of the circulation pump;
- a parameterization module (130) of the control module;
- a connector (140) for electrical communication;
- a communication module (150) connected, on the one hand, to the connector and, on the other hand, to the parameterization and control modules, the communication module being adapted to:
- distribute parameterization data and control data, received by the connector, respectively to the parameterization module and the control module, and
- identify by default the received data as control data and identify after receiving a switching signal, the received data as parameterization data, at least for a specified period of time.

2. The electronic control (110) according to claim 1, wherein the control module is parameterized by the parameterization module for converting the control data distributed by the communication module into a hydraulic control setpoint for controlling the pump drive motor.

3. The electronic control (110) of claim 2, wherein the control module is adapted to receive control data, and preferably to output feedback data in the form of flow, power and pressure.

4. The electronic control (110) according to one of claims 1 to 3, wherein the control module is adapted to receive the control data in pulse width modulation form.

5. The electronic control (110) according to one of claims 1 to 4, wherein the parameterization module is adapted to receive the parameterization data in the form of a universal asynchronous transceiver signal.

6. The electronic control (110) according to one of claims 1 to 5, wherein the switching signal is a frequency signal greater than 5,000 Hz, preferably greater than or equal to 20,000Hz, and of a duration greater than or equal to 100 ms.

7. The electronic control (110) according to one of claims 1 to 6, wherein the communication module is adapted to identify the data as parameterization data following the switching signal and up until failure to receive any signal for a predetermined period of time, preferably greater than or equal to 1 minute.

8. A circulating pump (160) for a domestic hydraulic installation, said pump comprising a drive motor (170) and an electronic control according to one of claims 1 to 7 adapted to control the drive motor (170).

9. A method of controlling a circulating pump (170) drive motor (160) using an electronic control (110) according to one of claims 1 to 7, the method comprising:
- supplying the communication module (150) of the electronic control with parameterization or control data via the connector (140) of the electronic control;
- default identification by the communication module (150) of the data provided as control data;
- identification after reception of a switching signal by the communication module (150) of the data supplied as parameterization data, at least for a specified period of time,
- parameterization of the control module (120) using the parameterization module (130) when the data supplied to the communication module are identified as parameterization data; or
- control of the drive motor (170) using the control module when the data supplied to the communication module is identified as control data.
